# EUROPEAN PATENT APPLICATION

(11) **EP 4 596 294 A1**
(43) Date of publication of application: **06.08.2025**
(21) Application number: 25153708.0
(22) Date of filing: 24.01.2025
(51) Int. Cl.: B60L 1/00, B60L 53/10, B60L 53/14, B60L 53/20, B60L 53/22, B60L 53/24, B60L 58/20, H02M 1/00, H02M 3/335, H02M 7/5387

(54) **INTEGRATED CONTROLLER FOR VEHICLE, INTEGRATED CONTROL SYSTEM, AND VEHICLE**

(30) Priority: 30.01.2024 CN 202410135753
(71) Applicant: BYD Company Limited, Shenzhen, Guangdong 518118 (CN)
(72) Inventor: LING, Heping, Shenzhen 518118 (CN); ZHENG, Lijiao, Shenzhen 518118 (CN); ZOU, Linli, Shenzhen 518118 (CN); HE, Yongxiang, Shenzhen 518118 (CN); CHEN, Min, Shenzhen 518118 (CN)
(74) Representative: Mathys & Squire

(57) **Abstract**

The present disclosure discloses an integrated controller for a vehicle, an integrated control system, and a vehicle. The integrated controller of the present disclosure includes a driving assembly and a control assembly. The driving assembly includes multiple high-voltage power modules integrally arranged. The control assembly includes multiple low-voltage control modules integrally arranged. Each of the low-voltage control modules is configurable to control each of the high-voltage power modules to operate. In the integrated controller of the present disclosure, a high-power assembly that implements a high-voltage function is integrated into the driving assembly, and a low-voltage control assembly is integrated into the control module. In this way, differentiated integration of the high-voltage power module that generates a relatively large amount of thermal energy and the low-voltage control module is achieved, impact of thermal energy of the high-voltage power module on the low-voltage control module is reduced, and stability and an electromagnetic compatibility level of a circuit are improved while reducing an occupied space, which helps improve usage safety and reliability of the integrated controller.

## Description

### FIELD

The present disclosure relates to the field of integrated control technologies, and more specifically, to an integrated controller for a vehicle, an integrated control system, and a vehicle.

### BACKGROUND

With continuous development of new energy vehicles, users have increasingly more functional requirements for the new energy vehicles. Currently, in China, the newly increased functional requirements are met generally by adding electronic control assemblies in a vehicle. In this case, a quantity and types of electronic control assemblies on the entire vehicle increase accordingly, requirements for space occupied by the electronic control assemblies also increase, and wiring harnesses between the electronic control assemblies also increase. Therefore, to meet the increasingly diversified functional requirements, components of multiple electronic control assemblies are often integrated into one piece, to omit connection wiring harnesses between the components, a fixing bracket for an individual component, or the like. In the related art, usage safety and reliability of the electronic control assemblies are to be improved.

### SUMMARY

Examples of the present disclosure provide an integrated controller for a vehicle, an integrated control system, and a vehicle.

An embodiment of the present disclosure provides an integrated controller for a vehicle. The integrated controller includes a driving assembly and a control assembly. The driving assembly includes multiple high-voltage power modules integrally arranged. The control assembly includes multiple low-voltage control modules integrally arranged. The low-voltage control module is configurable to control the high-voltage power module to operate.

In this way, a high-power assembly that implements a high-voltage function is integrated into the driving assembly, and a low-voltage control assembly is integrated into the control assembly. Therefore, the high-voltage power module that generates a relatively large amount of thermal energy and the low-voltage control module are separately integrated, impact of thermal energy of the high-voltage power module on the low-voltage control module is reduced, and stability and an electromagnetic compatibility level of a circuit are improved while reducing an occupied space, which helps improve usage safety and reliability of the integrated controller.

In some examples, the vehicle includes an alternating current (AC) charging and discharging port and a battery that are integrated thereon. The high-voltage power module is configurable to perform energy conversion. The high-voltage power module includes a charging module. The low-voltage control module includes a control chip. The control chip includes a first core. The first core is configured to control the charging module, to control the AC charging and discharging port to perform charging and discharging on the battery.

In some examples, the charging module includes an on-board charging module and a direct current (DC) conversion module. The on-board charging module is connected with the AC charging and discharging port and the battery. The DC conversion module is connected with the on-board charging module and the battery. The first core is configured to control the on-board charging module and the DC conversion module, to control the AC charging and discharging port to perform the charging and discharging on the battery.

In some examples, the battery includes a power battery and a low-voltage storage battery. The on-board charging module includes a first conversion circuit and a second conversion circuit that are integrated thereon. The first core is configured to output a first pulse signal, to control the first conversion circuit to convert an AC voltage of the AC charging and discharging port into a first DC voltage. The first core is configured to output a second pulse signal, to control the second conversion circuit to convert the first DC voltage into a second DC voltage. The second DC voltage is configurable to charge the power battery. The first core is further configured to output a third pulse signal, to control the DC conversion module to convert the second DC voltage into a third DC voltage. The third DC voltage is configurable to charge the low-voltage storage battery.

In some examples, the first conversion circuit includes a first bridge arm, a second bridge arm, a third bridge arm, a first capacitor, a first inductor, and a second inductor. Each bridge arm includes two switch transistors connected in series with each other. The first bridge arm, the second bridge arm, the third bridge arm, and the first capacitor are connected in parallel with each other. A first end of the first inductor and a first end of the second inductor are connected together with a first port of the AC charging and discharging port. A midpoint of the first bridge arm is connected to the first port of the AC charging and discharging port through the first inductor. A midpoint of the second bridge arm is connected to the first port of the AC charging and discharging port through the second inductor. A midpoint of the third bridge arm is connected with a second port of the AC charging and discharging port. The first core is configured to output the first pulse signal, to control off or on of the switch transistor of the first conversion circuit, to convert the AC voltage of the AC charging and discharging port into the first DC voltage.

In some examples, the second conversion circuit includes a second capacitor, a third capacitor, a third inductor, a fourth inductor, a first transformer, a fourth bridge arm, a fifth bridge arm, a sixth bridge arm, and a seventh bridge arm. The fourth bridge arm, the fifth bridge arm, and the first capacitor of the first conversion circuit are connected in parallel with each other. A midpoint of the fourth bridge arm is connected to a first end of the first transformer successively through the second capacitor and the third inductor. A midpoint of the fifth bridge arm is connected with a second end of the first transformer. The sixth bridge arm and the seventh bridge arm are connected in parallel with each other, and are connected together with two ends of the power battery. A midpoint of the sixth bridge arm is connected to a third end of the first transformer through the third capacitor and the fourth inductor. A midpoint of the seventh bridge arm is connected with a fourth end of the first transformer. The first core is configured to output the second pulse signal, to control off or on of a switch transistor of the second conversion circuit, to convert the first DC voltage into the second DC voltage.

In some examples, the DC conversion module includes an eighth bridge arm, a ninth bridge arm, a fourth capacitor, a fifth capacitor, a fifth inductor, a second transformer, a first switch transistor, a second switch transistor, and a diode. The eighth bridge arm and the ninth bridge arm are connected in parallel with each other. A midpoint of the eighth bridge arm is connected to a first end of the second transformer successively through the fourth capacitor and the fifth inductor. A midpoint of the ninth bridge arm is connected with a second end of the second transformer. A third end and a fourth end of the second transformer are connected to the diode, the fifth capacitor, and the low-voltage storage battery through the first switch transistor and the second switch transistor. The first core is configured to output the third pulse signal, to control off or on of a switch transistor of the DC conversion module, to convert the second DC voltage into the third DC voltage.

In some examples, the vehicle includes a compressor. The high-voltage power module is configurable to perform energy conversion. The high-voltage power module includes a compressor driving module that is integrated thereon. The low-voltage control module includes a control chip. The control chip includes a second core. The second core is configured to control the compressor driving module to operate, to drive the compressor to operate.

In some examples, the compressor includes three compressor phase lines. The compressor driving module includes a tenth bridge arm, an eleventh bridge arm, a twelfth bridge arm, and a sixth capacitor. Each bridge arm includes two switch transistors connected in series with each other. The sixth capacitor, the tenth bridge arm, the eleventh bridge arm, and the twelfth bridge arm are connected in parallel with each other. A midpoint of the tenth bridge arm, a midpoint of the eleventh bridge arm, and a midpoint of the twelfth bridge arm are respectively connected with first ends of the three compressor phase lines of the compressor. Other ends of the three compressor phase lines are connected with each other. The second core is configured to output a fourth pulse signal, to control off and on of the switch transistor of the compressor driving module, to drive the compressor to operate.

In some examples, the vehicle includes a main driving motor. The high-voltage power module is configurable to perform energy conversion. The high-voltage power module includes a main driving motor driving module that is integrated thereon. The low-voltage control module includes a control chip. The control chip includes a second core. The second core is configured to control the main driving motor driving module to operate, to drive the main driving motor to operate.

In some examples, the main driving motor includes three main driving phase lines. The main driving motor driving module includes a thirteenth bridge arm, a fourteenth bridge arm, a fifteenth bridge arm, and a seventh capacitor. Each bridge arm includes two switch transistors connected in series with each other. The seventh capacitor, the thirteenth bridge arm, the fourteenth bridge arm, and the fifteenth bridge arm are connected in parallel with each other. A midpoint of the thirteenth bridge arm, a midpoint of the fourteenth bridge arm, and a midpoint of the fifteenth bridge arm are respectively connected with first ends of the three main driving phase lines of the main driving motor. Other ends of the three main driving phase lines are connected with each other. The second core is configured to output a fifth pulse signal, to control off and on of the switch transistor of the main driving motor driving module, to drive the main driving motor to operate.

In some examples, the vehicle further includes a DC charging and discharging port and a power battery. The high-voltage power module is configurable to perform energy conversion. The high-voltage power module includes a main driving motor driving module. The low-voltage control module includes a control chip that is integrated thereon. The control chip includes a second core. The second core is configurable to control the main driving motor driving module to operate, to control the DC charging and discharging port to perform DC charging and discharging on the power battery.

In some examples, the vehicle further includes a control switch. An end of the DC charging and discharging port is connected to a positive electrode of the power battery through the control switch. Another end of the DC charging and discharging port is connected with the main driving motor driving module. The second core is configurable to control off of the control switch and control the main driving motor driving module to operate, to control the DC charging and discharging port to perform the DC charging and discharging on the power battery.

In some examples, the vehicle further includes a capacitor. An end of the DC charging and discharging port is connected with an end of the capacitor, and is connected to the power battery through a main driving motor. Another end of the DC charging and discharging port is connected with another end of the capacitor and the main driving motor driving module. The second core is configurable to control the main driving motor driving module to operate, to control the capacitor and the main driving motor to convert a voltage of the DC charging and discharging port into a voltage configurable for charging the power battery, to perform the DC charging and discharging on the power battery.

In some examples, the vehicle includes a power battery. The low-voltage control module includes a control chip that is integrated thereon. The control chip includes a third core. The third core is configured to perform energy management on the power battery.

In some examples, the low-voltage control module includes a control module and a control chip that are integrated thereon. The control chip includes a third core. The third core is configured to control the control module to operate, to realize a control function of the vehicle.

In some examples, the vehicle further includes a power battery pack and a power battery. The integrated controller and the power battery are accommodatable in the power battery pack.

An example of the present disclosure provides an integrated control system. The integrated control system includes a load and the integrated controller in any of the above examples. The integrated controller is configured to control the load to operate.

An example of the present disclosure provides a vehicle. The vehicle includes the integrated controller in any of the above examples or the integrated control system in the above example.

Additional aspects and advantages of the present disclosure are to be given in the following description, some of which become apparent from the following description or are learned from the practice of the present disclosure.

### BRIEF DESCRIPTION OF THE DRAWINGS

The above and/or additional aspects and advantages of the present disclosure become apparent and comprehensible from the descriptions of examples with reference to following accompanying drawings.
FIG. 1 is a partial schematic diagram of a vehicle according to an example of the present disclosure;
FIG. 2 is a partial schematic diagram of a vehicle according to an example of the present disclosure;
FIG. 3 is a schematic diagram of a circuit of a driving assembly according to an example of the present disclosure;
FIG. 4 is a partial schematic diagram of a vehicle according to an example of the present disclosure;
FIG. 5 is a schematic diagram of a circuit of a driving assembly according to an example of the present disclosure;
FIG. 6 is a partial schematic diagram of a vehicle according to an example of the present disclosure;
FIG. 7 is a schematic diagram of a circuit of a driving assembly according to an example of the present disclosure;
FIG. 8 is a partial schematic diagram of a vehicle according to an example of the present disclosure;
FIG. 9 is a partial schematic diagram of a vehicle according to an example of the present disclosure; and
FIG. 10 is a partial schematic diagram of a vehicle according to an example of the present disclosure.

### DETAILED DESCRIPTION

Examples of the present disclosure are described in detail below, and examples are shown in the accompanying drawings. Same or similar reference numerals throughout represent same or similar elements or elements having the same or similar functions. The examples described below with reference to the accompanying drawings are exemplary, and are merely configured for explaining the present disclosure, and cannot be construed as a limitation on the present disclosure.

With continuous development of new energy vehicles, users have increasingly more functional requirements for the new energy vehicles. Currently, in China, the newly increased functional requirements are met generally by adding electronic control assemblies in a vehicle. In this case, a quantity and types of electronic control assemblies on the entire vehicle increase accordingly, requirements for space occupied by the electronic control assemblies also increase, and wiring harnesses between the electronic control assemblies also increase. Therefore, to meet the increasingly diversified functional requirements, components of multiple electronic control assemblies are often integrated into one piece, to omit connection wiring harnesses between the components, a fixing bracket for an individual component, or the like. In the related art, usage safety and reliability of the electronic control assemblies are to be improved.

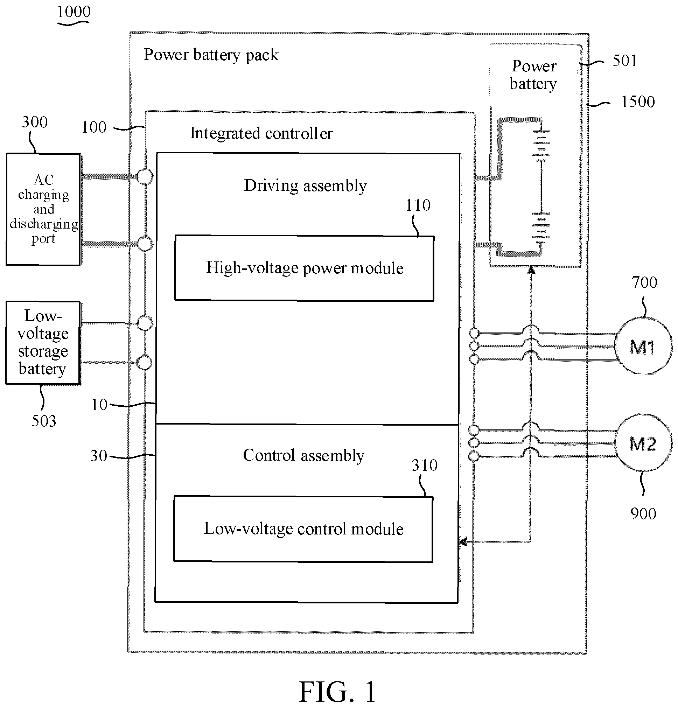

Referring to FIG. 1, an example of the present disclosure provides an integrated controller 100 of a vehicle 1000. The integrated controller 100 includes a driving assembly 10 and a control assembly 30. The driving assembly 10 includes multiple high-voltage power modules 110 integrally arranged. The high-voltage power module 110 can be configured to perform energy conversion. The control assembly 30 includes multiple low-voltage control modules 310 integrally arranged. Each of the low-voltage control modules 310 can be configured to control each of the high-voltage power modules 110 to operate.

Specifically, the integrated controller 100 may be arranged in a power battery pack. If an assembly is a high-voltage power assembly, the assembly may be integrated into the driving assembly 10. If the assembly is a low-voltage control assembly, the assembly may be integrated into the control assembly 30, to separately integrate the high-voltage power assembly and the low-voltage control assembly. The high-voltage power assembly can be configured to perform energy conversion, for example, perform voltage conversion, or perform conversion between electric energy, magnetic energy, and kinetic energy, which often generates a relatively large amount of thermal energy. During integrated arrangement, a relatively large gap needs to be provided between the high-voltage power assemblies. However, a relatively large gap does not need to be reserved between the low-voltage control assemblies. Therefore, the low-voltage control assemblies are integrated together, so that an occupied space may be reduced. In addition, the low-voltage control assembly has a relatively high requirement for precision. If the low-voltage control assembly and the high-voltage power assembly are arranged together, the low-voltage control assembly may be caused to have reduced accuracy or another failure as a result of being affected by thermal energy generated by the high-voltage power assembly and a magnetic field. Therefore, the low-voltage control assembly and the high-voltage power assembly are separately integrated, which may avoid the impact of thermal energy generated by the high-voltage power assembly on the low-voltage control assembly.

In this way, a high-power assembly that implements a high-voltage function is integrated into the driving assembly 10, and a low-voltage control assembly is integrated into the control assembly 30. Therefore, the high-voltage power module 110 that generates a relatively large amount of thermal energy and the low-voltage control module 310 are separately integrated, impact of thermal energy of the high-voltage power module 110 on the low-voltage control module 310 is reduced, and stability and an electromagnetic compatibility level of a circuit are improved while reducing an occupied space, which helps improve usage safety and reliability of the integrated controller 100.

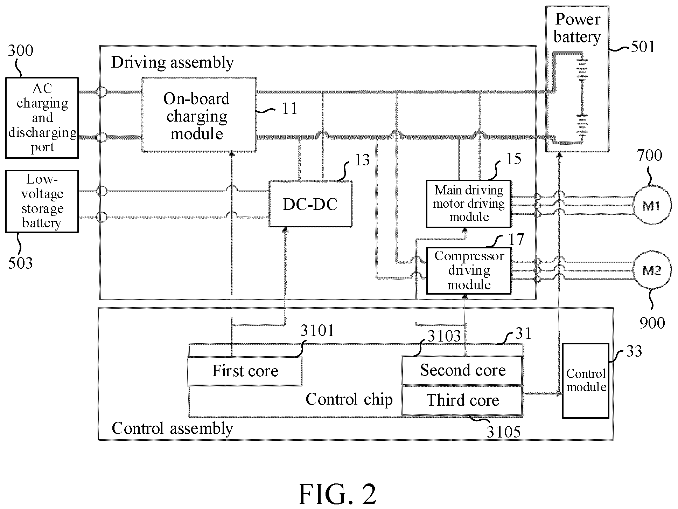

Referring to FIG. 2, in some examples, a vehicle 1000 includes an alternating current (AC) charging and discharging port 300 and a battery that are integrated thereon. A high-voltage power module 110 can be configured to perform energy conversion. The high-voltage power module 110 includes a charging module. A low-voltage control module 310 includes a control chip 31. The control chip 31 includes a first core 3101. The first core 3101 is configured to control the charging module, to control the AC charging and discharging port 300 to perform charging and discharging on the battery.

Specifically, under the control of the first core 3101 of the control chip 31, the charging module can be configured to control the AC charging and discharging port 300 to perform the charging and discharging on the battery. The charging module may rectify an AC voltage of the AC charging and discharging port 300 to convert the AC voltage into a DC voltage, to perform charging on the battery. If the converted DC voltage is not consistent with a set charging voltage of the battery, DC voltage convention may be further performed on the DC voltage to convert the DC voltage to the set charging voltage to perform the charging on the battery.

In this way, under the control of the first core 3101, the charging module can control the AC charging and discharging port 300 to perform the charging and discharging on the battery, to achieve the charging and discharging of the battery.

Referring to FIG. 2, in some examples, the charging module includes an on-board charging module 11 and a DC-DC 13. The on-board charging module 11 is connected with the AC charging and discharging port 300 and the battery. The DC-DC 13 is connected with the on-board charging module 11 and the battery. The first core 3101 is configured to control the on-board charging module 11 and the DC-DC 13, to control the AC charging and discharging port 300 to perform the charging and discharging on the battery.

Specifically, the battery includes a battery core of a power battery 501 and a low-voltage storage battery 503. The power battery 501 and the integrated controller 100 are arranged in the power battery pack. Charging and discharging the power battery 501 is charging and discharging the battery core. The on-board charging module 11 is connected with the AC charging and discharging port 300 and the battery core. The DC-DC 13 is connected with the low-voltage storage battery 503. The DC-DC is further connected with a joint of the on-board charging module 11 and the battery core. The control assembly 30 includes the control chip 31. The first core 3101 of the control chip 31 is configured to control the on-board charging module 11 and the DC-DC to operate, to control the AC charging and discharging port 300 to perform charging on the battery core and/or the low-voltage storage battery 503, or to control the battery core and/or the low-voltage storage battery 503 to discharge to outside through the AC charging and discharging port 300. In addition, the first core 3101 is further configured to control the on-board charging module 11 and the DC-DC, to control the low-voltage storage battery 503 to charge the power battery 501. The first core 3101 is further configured to control the DC-DC to perform pre-charging on the power battery 501, and then control the on-board charging module 11 to control the AC charging and discharging port 300 to performing charging on the pre-charged power battery 501. Therefore, a control assembly does not need to be arranged for each function, and the above functions can be achieved by reusing the first core 3101, which reduces a quantity of control assemblies, thereby reducing a space occupied by the control assemblies.

In this way, the on-board charging module 11 and the DC-DC may be controlled to operate through the first core 3101 of the control chip 31, to control the AC charging and discharging port 300 to perform the charging and discharging on the battery core and/or the low-voltage storage battery 503. Therefore, the charging of the battery core and/or the low-voltage storage battery 503 is controlled, and the control assembly does not need to be separately arranged for the charging and discharging, which reduces the quantity of control assemblies, and achieves functional integration.

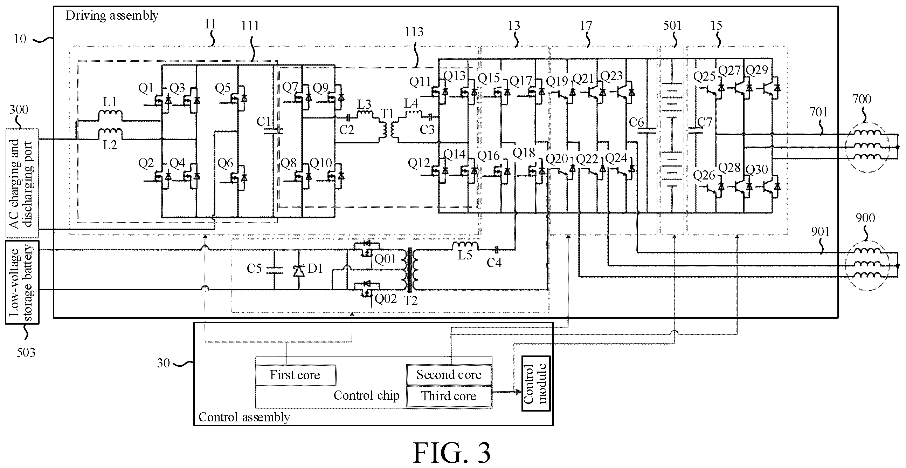

Referring to FIG. 2 and FIG. 3, in some examples, the battery includes the power battery 501 and the low-voltage storage battery 503. The on-board charging module 11 includes a first conversion circuit 111 and a second conversion circuit 113 that are integrated thereon. The first core 3101 is configured to output a first pulse signal, to control the first conversion circuit 111 to convert an AC voltage of the AC charging and discharging port 300 into a first DC voltage. The first core 3101 is configured to output a second pulse signal, to control the second conversion circuit 113 to convert the first DC voltage into a second DC voltage. The second DC voltage can be configured to charge the power battery 501. The first core 3101 is further configured to output a third pulse signal, to control the DC-DC 13 to convert the second DC voltage into a third DC voltage. The third DC voltage can be configured to charge the low-voltage storage battery 503.

Specifically, since the power battery 501 provides high-voltage charging and the low-voltage storage battery 503 provides low-voltage charging, a conversion circuit is arranged to convert a voltage after AC charging and discharging into a required voltage, to achieve charging of the battery. The first conversion circuit 111 is a power factor correction (PFC) circuit, and is configured to rectify and perform electric energy quality processing on the AC voltage of the AC charging and discharging port 300. The first conversion circuit 111 and the second conversion circuit 113 are integrated as the on-board charging module 11. The first core 3101 may output a pulse signal (a pulse width modulation (PWM) signal) to control the conversion circuit to operate. When the first core 3101 outputs the first pulse signal, the first conversion circuit 111 is configured to convert the AC voltage of the AC charging and discharging port 300 into the first DC voltage, and the second conversion circuit 113 is configured to convert the first DC voltage into the second DC voltage. The second DC voltage may be configured to charge the battery core of the power battery 501. The DC-DC may convert the second DC voltage into the third DC voltage. The third DC voltage is less than the second DC voltage. The third DC voltage can charge the low-voltage storage battery 503 to achieve voltage conversion, thereby achieving the charging of the power battery 501 and the low-voltage storage battery 503. In addition, the first DC circuit may be configured to charge a battery of the vehicle that does not require high-voltage charging, or may supply low-voltage power to an electric module of the vehicle.

In this way, the first core 3101 outputs the pulse signal, so that the first conversion circuit 111, the second conversion circuit 113, and the DC conversion module may be controlled to perform voltage conversion, thereby achieving control of the charging of the battery by the first core 3101.

Referring to FIG. 3, in some examples, the first conversion circuit 111 includes a first bridge arm, a second bridge arm, a third bridge arm, a first capacitor, a first inductor, and a second inductor. Each bridge arm includes two switch transistors connected in series with each other. The first bridge arm, the second bridge arm, the third bridge arm, and the first capacitor are connected in parallel with each other. A first end of the first inductor and a first end of the second inductor are connected together with a first port of the AC charging and discharging port 300. A midpoint of the first bridge arm is connected to the first port of the AC charging and discharging port 300 through the first inductor. A midpoint of the second bridge arm is connected to the first port of the AC charging and discharging port 300 through the second inductor. A midpoint of the third bridge arm is connected with a second port of the AC charging and discharging port 300. The first core 3101 is configured to output the first pulse signal, to control off or on of each of the switch transistors of the first conversion circuit 111, to convert the AC voltage of the AC charging and discharging port 300 into the first DC voltage.

Specifically, the first bridge arm includes a switch transistor Q1 and a switch transistor Q2 connected in series. The second bridge arm includes a switch transistor Q3 and a switch transistor Q4 connected in series. The third bridge arm includes a switch transistor Q5 and a switch transistor Q6 connected in series. The switch transistor Q1 and the switch transistor Q2, the switch transistor Q3 and the switch transistor Q4, the switch transistor Q5 and the switch transistor Q6, a switch transistor Q7 and a switch transistor Q8, a switch transistor Q9 and a switch transistor Q10, and a first capacitor C1 are connected in parallel with each other. A first end of a first inductor L1 and a first end of a second inductor L2 are connected together with the first port of the AC charging and discharging port 300. The midpoint of the first bridge arm is connected with a second end of the first inductor L 1, the midpoint of the second bridge arm is connected with a second end of the second inductor L2, and the midpoint of the third bridge arm is connected with the second port of the AC charging and discharging port 300. In other words, midpoints of the switch transistor Q1 and the switch transistor Q2 are connected with the second end of the first inductor L1, midpoints of the switch transistor Q3 and the switch transistor Q4 are connected with the second end of the second inductor L2, and midpoints of the switch transistor Q5 and the switch transistor Q6 are connected with the second port of AC charging and discharging port 300. The first core 3101 can output N sets of first pulse signals, to control off or on of the switch transistor of the first conversion circuit 111, to convert the AC voltage of the AC charging and discharging port into the first DC voltage. In this way, the conversion of the AC voltage to the DC voltage is achieved.

In this way, the first core 3101 outputs the first pulse signal to control the on/off of the switch transistor of the first conversion circuit 111, so that the AC voltage can be converted into the first DC voltage, thereby achieving the conversion of the AC voltage of the AC charging and discharging port 300 to the first DC voltage.

Referring to FIG. 3, in some examples, the second conversion circuit 113 includes a second capacitor, a third capacitor, a third inductor, a fourth inductor, a first transformer, a fourth bridge arm, a fifth bridge arm, a sixth bridge arm, and a seventh bridge arm. The fourth bridge arm, the fifth bridge arm, and the first capacitor of the first conversion circuit are connected in parallel with each other. A midpoint of the fourth bridge arm is connected to a first end of the first transformer successively through the second capacitor and the third inductor. A midpoint of the fifth bridge arm is connected with a second end of the first transformer. The sixth bridge arm and the seventh bridge arm are connected in parallel with each other, and are connected together with two ends of the power battery 501. A midpoint of the sixth bridge arm is connected to a third end of the first transformer through the third capacitor and the fourth inductor. A midpoint of the seventh bridge arm is connected with a fourth end of the first transformer. The first core 3101 is configured to output the second pulse signal, to control off or on of a switch transistor of the second conversion circuit 113, to convert the first DC voltage into the second DC voltage.

Specifically, a first end of a first transformer T1 is connected to the midpoint of the fourth bridge arm through the second capacitor C2 and the third inductor, that is, connected to a joint of the switch transistor Q7 and the switch transistor Q8. The second end of the second transformer T2 is connected to the midpoint of the fifth bridge arm, that is, connected to a joint of the switch transistor Q9 and the switch transistor Q10. The fourth bridge arm includes the switch transistor Q7 and the switch transistor Q8 connected in series. The fifth bridge arm includes the switch transistor Q9 and the switch transistor Q10 connected in series. The sixth bridge arm includes a switch transistor Q11 and a switch transistor Q12 connected in series. The seventh bridge arm includes a switch transistor Q13 and a switch transistor Q14 connected in series. The midpoint of the sixth bridge arm is connected to a third end of the first transformer T1 through a third capacitor C3 and a fourth inductor L4. The midpoint of the seventh bridge arm is connected to a fourth end of the first transformer T1. The sixth bridge arm and the seventh bridge arm are connected in parallel, and are connected together with the two ends of the power battery 501. The first core 3101 can output N2 sets of second pulse signals, to control on/off of the switch transistor Q11, the switch transistor Q12, the switch transistor Q13, and the switch transistor Q14, thereby converting the first DC voltage obtained by the first conversion circuit 111 into the second DC voltage, to charge the power battery 501. N2 is an integer that may be adjusted as required.

In this way, the first core 3101 outputs the second pulse signal to control the on/off of the switch transistor of the second conversion circuit 113, so that the first DC voltage can be converted into the second DC voltage, to obtain a voltage that can charge the power battery 501, thereby achieving the charging of the power battery 501.

Referring to FIG. 3, in some examples, the DC-DC 13 includes an eighth bridge arm, a ninth bridge arm, a fourth capacitor, a fifth capacitor, a fifth inductor, a second transformer, a first switch transistor, a second switch transistor, and a diode. The eighth bridge arm and the ninth bridge arm are connected in parallel with each other. A midpoint of the eighth bridge arm is connected to a first end of the second transformer successively through the fourth capacitor and the fifth inductor. A midpoint of the ninth bridge arm is connected with a second end of the second transformer. A third end and a fourth end of the second transformer are connected to the diode, the fifth capacitor, and the low-voltage storage battery 503 through the first switch transistor and the second switch transistor. The first core 3101 is configured to output the third pulse signal, to control off or on of each of the switch transistors of the DC-DC 13, to convert the second DC voltage into the third DC voltage.

Specifically, the eighth bridge arm includes a switch transistor Q15 and a switch transistor Q16 connected in series. The ninth bridge arm includes a switch transistor Q17 and a switch transistor Q18 connected in series. The eighth bridge arm and the ninth bridge arm are both connected with the seventh bridge arm in parallel. The midpoint of the eighth bridge arm is connected to a first end of the second transformer T2 successively through the fourth capacitor C4 and a fifth inductor L5, and the midpoint of the ninth bridge arm is connected with a second end of the second transformer T2. To be specific, a joint of the switch transistor Q15 and the switch transistor Q16 is connected with the first end of the second transformer T2, and a joint of the switch transistor Q17 and the switch transistor Q18 is connected with the second end of the second transformer T2. A third end of the second transformer T2 is connected with a drain of a first switch transistor Q01. A fourth end of the second transformer T2 is connected with a drain of a second switch transistor Q02. A source of the first switch transistor Q01 and a source of the second switch transistor Q02 are connected together with a diode D 1 and the fifth capacitor C5, and are connected with two ends of the low-voltage storage battery 503. The first core 3101 can output N3 sets of third pulse signals, to control on/off of the switch transistor Q15, the switch transistor Q16, the switch transistor Q17, the switch transistor Q18, the first switch transistor Q01, and the second switch transistor Q02, thereby converting the second DC voltage obtained by the second conversion circuit 113 into the third DC voltage, to charge the low-voltage storage battery 503. N3 is an integer that may be adjusted as required.

In this way, the first core 3101 outputs the third pulse signal to control the on/off of the switch transistor of the DC conversion module, so that the second DC voltage can be converted into the third DC voltage, to obtain the voltage that can charge the low-voltage storage battery 503, thereby achieving the charging of the low-voltage storage battery 503.

Referring to FIG. 2, in some examples, the vehicle 1000 includes a compressor 900. The high-voltage power module 110 can be configured to perform energy conversion. The high-voltage power module 110 includes a compressor driving module 17 that is integrated thereon. The low-voltage control module 310 includes a control chip 31. The control chip 31 includes a second core 3103. The second core 3103 is configured to control the compressor driving module 17 to operate, to drive the compressor 900 to operate.

Specifically, the compressor 900 can be used in a refrigeration system of the vehicle 1000. The compressor driving module 17 is the high-voltage power module 110, and therefore is integrated into the driving assembly 10. The second core 3103 may control the compressor driving module 17 to operate, to control the compressor 900 to operate. A main driving motor driving module 15 and the compressor 900 may further operate simultaneously under the control of the second core 3103, so that a main driving motor 700 and the compressor 900 can operate simultaneously.

In this way, the compressor 900 may further operate under the control of the second core 3103, to cause the compressor 900 to operate.

Referring to FIG. 3, in some examples, the compressor 900 includes three compressor phase lines 901. The compressor driving module includes a tenth bridge arm, an eleventh bridge arm, a twelfth bridge arm, and a sixth capacitor. Each bridge arm includes two switch transistors connected in series with each other. The sixth capacitor, the tenth bridge arm, the eleventh bridge arm, and the twelfth bridge arm are connected in parallel with each other. A midpoint of the tenth bridge arm, a midpoint of the eleventh bridge arm, and a midpoint of the twelfth bridge arm are respectively connected with first ends of the three compressor phase lines 901 of the compressor 900. Other ends of the three compressor phase lines 901 are connected with each other. The second core 3103 is configured to output a fourth pulse signal, to control off and on of each of the switch transistors of the compressor 900 driving module, to drive the compressor 900 to operate.

Specifically, the tenth bridge arm, the eleventh bridge arm, the twelfth bridge arm, and a sixth capacitor C6 are connected in parallel with each other. In addition, the tenth bridge arm, the eleventh bridge arm, and the twelfth bridge arm are connected in parallel with the two ends of the power battery 501, that is, connected in parallel with two output terminals of the on-board charging module 11, to obtain the electric energy. The tenth bridge arm includes a switch transistor Q19 and a switch transistor Q20. The eleventh bridge arm includes a switch transistor Q21 and a switch transistor Q22. The twelfth bridge arm includes a switch transistor Q23 and a switch transistor Q24. The midpoint of the tenth bridge arm is connected with an end of a first compressor phase line of the compressor 900. To be specific, a joint of the switch transistor Q19 and the switch transistor Q20 is connected with the end of the first compressor phase line. The midpoint of the eleventh bridge arm is connected with an end of a second compressor phase line of the compressor 900. To be specific, a joint of the switch transistor Q21 and the switch transistor Q22 is connected with the end of the second compressor phase line. The midpoint of the twelfth bridge arm is connected with an end of a third compressor phase line of the compressor 900. To be specific, a joint of the switch transistor Q23 and the switch transistor Q24 is connected with an end of the third compressor phase line. Other ends of the first compressor phase line, the second compressor phase line, and the third compressor phase line are connected together. The second core 3103 can control to output N4 sets of fourth pulse signals at different times, to control off and on of the switch transistor of the compressor 900 driving module, thereby achieving conversion between the electric energy, the magnetic energy, and the kinetic energy, to drive the compressor 900 to operate. N4 is an integer that may be adjusted as required.

In this way, the compressor 900 driving module and the compressor phase lines 901 are connected with each other, and the second core 3103 can output the fourth pulse signal to control the off and on of the switch transistor of the compressor 900 driving module, thereby achieving the driving of the compressor 900.

Referring to FIG. 2, in some examples, the vehicle 1000 includes the main driving motor 700. The high-voltage power module 110 can be configured to perform energy conversion. The high-voltage power module 110 includes the main driving motor driving module 15 that is integrated thereon. The low-voltage control module 310 includes the control chip 31. The control chip 31 includes the second core 3103. The second core 3103 is configured to control the main driving motor driving module 15 to operate, to drive the main driving motor 700 to operate.

Specifically, the main driving motor 700 is configured to drive the vehicle 1000 to travel. The main driving motor driving module 15 is the high-voltage power module 110, and therefore is integrated into the driving assembly 10. The second core 3103 can control the main driving motor driving module 15 to operate, to control the main driving motor 700 to operate.

In this way, the main driving motor driving module 15 may operate under the control of the second core 3103, to cause the main driving motor 700 to operate.

Referring to FIG. 3, in some examples, the main driving motor 700 includes three main driving phase lines 701. The main driving motor driving module 15 includes a thirteenth bridge arm, a fourteenth bridge arm, a fifteenth bridge arm, and a seventh capacitor. Each bridge arm includes two switch transistors connected in series with each other. The seventh capacitor, the thirteenth bridge arm, the fourteenth bridge arm, and the fifteenth bridge arm are connected in parallel with each other. A midpoint of the thirteenth bridge arm, a midpoint of the fourteenth bridge arm, and a midpoint of the fifteenth bridge arm are respectively connected with first ends of the three main driving phase lines 701 of the main driving motor 700. Other ends of the three main driving phase lines 701 are connected with each other. The second core 3103 is configured to output a fifth pulse signal, to control off and on of each of the switch transistors of the main driving motor driving module 15, to drive the main driving motor 700 to operate.

Specifically, the thirteenth bridge arm, the fourteenth bridge arm, the fifteenth bridge arm, and a seventh capacitor C7 are connected in parallel with each other. In addition, the thirteenth bridge arm, the fourteenth bridge arm, and the fifteenth bridge arm are connected in parallel at the two ends of the power battery 501, to obtain the electric energy from the power battery 501. The thirteenth bridge arm includes a switch transistor Q25 and a switch transistor Q26. The fourteenth bridge arm includes a switch transistor Q27 and a switch transistor Q28. The fifteenth bridge arm includes a switch transistor Q29 and a switch transistor Q30. The midpoint of the thirteenth bridge arm is connected with an end of a first main driving phase line of the main driving motor 700. To be specific, a joint of the switch transistor Q25 and the switch transistor Q26 is connected with the end of the first main driving phase line. The midpoint of the fourteenth bridge arm is connected with an end of a second main driving phase line of the main driving motor 700. To be specific, a joint of the switch transistor Q27 and the switch transistor Q28 is connected with the end of the second main driving phase line. The midpoint of the fifteenth bridge arm is connected with an end of a third main driving phase line of the main driving motor 700. To be specific, a joint of the switch transistor Q29 and the switch transistor Q30 is connected with the end of the third main driving phase line. Other ends of the first main driving phase line, the second main driving phase line, and the third main driving phase line are connected together. The second core 3103 can control to output N5 sets of fifth pulse signals in a time-sharing manner, to control off and on of the switch transistor of the main driving motor driving module 15, thereby achieving conversion between the electric energy, the magnetic energy, and the kinetic energy, to drive the main driving motor 700 to operate. N5 is an integer that may be adjusted as required.

In this way, the main driving motor driving module 15 and the main driving phase lines 701 are connected with each other, and the second core 3103 can output the fifth pulse signal, to control the off and on of the switch transistor of the main driving motor driving module 15, thereby achieving the driving of the main driving motor 700.

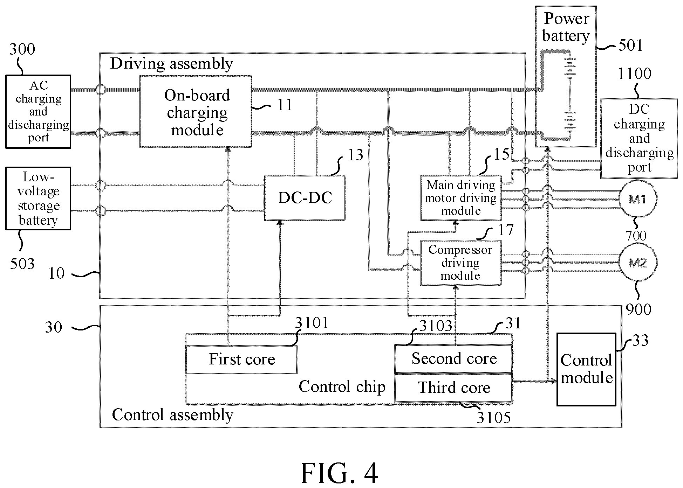

Referring to FIG. 4, in some examples, a vehicle 1000 further includes a DC charging and discharging port 1100 and a power battery 501. The high-voltage power module 110 can be configured to perform energy conversion. The high-voltage power module 110 includes a main driving motor driving module 15. A low-voltage control module 310 includes a control chip 31 that is integrated thereon. The control chip 31 includes a second core 3103. The second core 3103 can be configured to control the main driving motor driving module 15 to operate, to control the DC charging and discharging port 1100 to perform DC charging and discharging on the power battery 501.

Specifically, the second core 3103 may control the DC charging and discharging port 1100 to perform the DC charging and discharging on the power battery 501 through on/off of a switch transistor of a bridge arm of the main driving motor driving module 15, thereby achieving functional reuse of the second core 3103 and the main driving motor driving module 15, and improving functional integration of the integrated controller 1000.

In this way, the main driving motor driving module 15 may control the DC charging and discharging port 1100 to perform the DC charging and discharging on the power battery 501 under the control of the second core 3103, thereby achieving the functional reuse of the second core 3103 and the main driving motor driving module 15, improving the functional integration of the integrated controller 100, and further reducing a volume of the integrated controller 100.

Referring to FIG. 4, in some examples, the vehicle 1000 further includes a control switch. An end of the DC charging and discharging port 1100 is connected to a positive electrode of the power battery 501 through the control switch. Another end of the DC charging and discharging port 1100 is connected with the main driving motor driving module 15. The second core 3103 can be configured to control off of the control switch and control the main driving motor driving module 15 to operate, to control the DC charging and discharging port 1100 to perform the DC charging and discharging on the power battery 501.

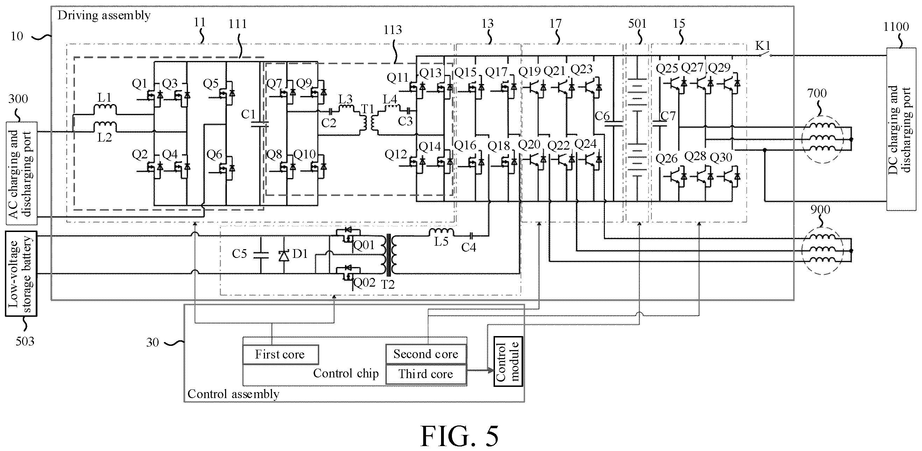

Specifically, referring to FIG. 5, a battery includes a power battery 501 and a low-voltage storage battery 503. In this embodiment, an example in which the battery is the power battery 501 is used for description. The DC charging and discharging port 1100 is connected to the power battery 501 through the main driving motor driving module 15. An end of the DC charging and discharging port 1100 may be connected to a drain of the switch transistor Q29 through a control switch K1. The control switch K 1 may be configured to control the DC charging and discharging port 1100 to perform charging and discharging on the power battery 501. Another end of the DC charging and discharging port 1100 is connected with the third main driving phase line and the midpoint of the fifteenth bridge arm. The second core 3103 of the control chip 31 can be configured to control the main driving motor driving module 15, to control the DC charging and discharging port 1100 to perform the DC charging on the power battery 501.

In this way, the DC charging and discharging port 1100 may be connected to the battery through the main driving motor driving module 15. The second core 3103 of the control chip 31 can be configured to control the main driving motor driving module 15, to control the DC charging and discharging port 1100 to perform the DC charging on the power battery 501.

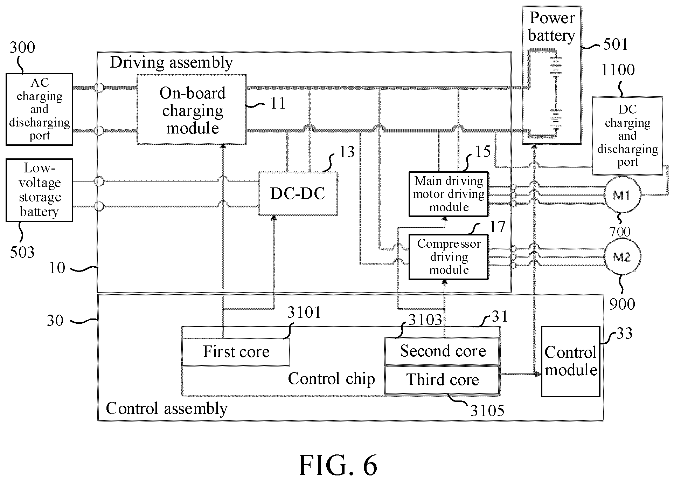

Referring to FIG. 6, in some examples, a vehicle 1000 further includes a capacitor. An end of a DC charging and discharging port 1100 is connected with an end of the capacitor, and is connected to a power battery 501 through a main driving motor 700. Another end of the DC charging and discharging port 1100 is connected with another end of the capacitor and a main driving electrode driving module 15. A second core 3103 can be configured to control the main driving motor driving module to operate, to control the capacitor and the main driving motor 700 to convert a voltage of the DC charging and discharging port 1100 into a voltage that can charge the power battery 501, to perform DC charging and discharging on the power battery 501.

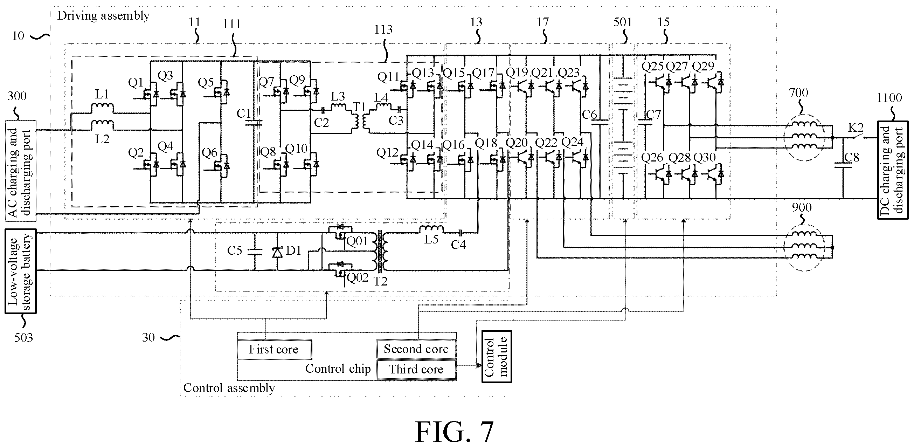

Specifically, referring to FIG. 7, a DC charging and discharging port 1100 is connected to a power battery 501 through a main driving motor driving module 15 and a main driving motor 700. A capacitor C8 is connected in parallel at two ends of the DC charging and discharging port 1100. An end of the DC charging and discharging port 1100 may be connected through a switch K2 to a first end of the capacitor C8 and ends of three main driving phase lines 701 of the main driving motor 700 connected with each other, thereby connecting the main driving motor 700. The switch K2 may be configured to achieve connection between the DC charging and discharging port 1100 and a three-phase winding of the main driving motor 700. Another end of the DC charging and discharging port 1100 is connected with a second end of a fifteenth bridge arm and a second end of the capacitor C8. The capacitor C8 may be configured to boost a voltage of the DC charging and discharging port, and may be further configured to store energy to support operation of the main driving motor. The capacitor C8, the main driving motor 700, and the main driving motor driving module 15 can boost the voltage of the DC charging and discharging port 1100 under appropriate control of a control chip 31, to convert the voltage into a voltage set by the power battery 501, thereby achieving reuse of the main driving motor 700, the capacitor C8, and the main driving motor driving module 15. In addition, the vehicle 1000 can be enabled to convert a voltage of a charging pile connected to the DC charging and discharging port 1100 to charge the power battery 501 when there is a voltage mismatch.

In this way, the DC charging and discharging port 1100 may be connected to a battery through the main driving motor 700 and the main driving motor driving module 15. The main driving motor 700 can convert the voltage of the DC charging and discharging port 1100 into a voltage that can charge the battery, to achieve the reuse of the main driving motor 700, thereby achieving integration of functions.

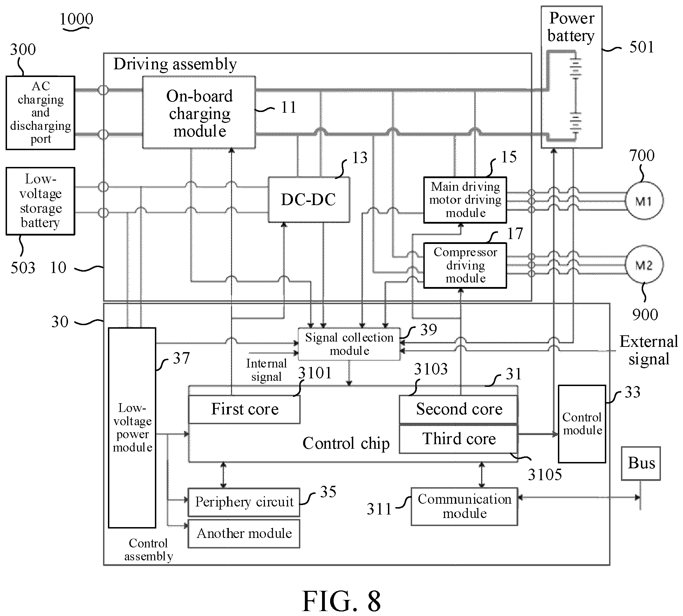

Referring to FIG. 8, in some examples, a vehicle 1000 includes a power battery 501. A low-voltage control module 310 includes a control chip 31 that is integrated thereon. The control chip 31 includes a third core 3105. The third core 3105 is configured to perform energy management on the power battery 501.

Specifically, a battery includes the power battery 501 and a low-voltage storage battery 503. In this embodiment, an example in which the battery is the power battery 501 is used for description. The third core 3105 of the control chip 31 may be configured to perform energy management on the battery, to achieve intelligent management and charging and discharging safety management of the power battery 501.

In this way, the third core 3105 performs the energy management on the power battery 501, so as to achieve the intelligent management and the charging and discharging safety management of the power battery 501.

In some examples, the low-voltage control module 310 includes a control chip 31 and a control module 33 that are integrated thereon. The control chip includes a third core 3105. The third core 3105 is configured to control the control module 33 to operate, to implement control functions of the vehicle 1000.

Specifically, the control functions of the vehicle 1000 include calculation of an accelerator depth and a brake depth of the whole vehicle, driving of a heating module of the whole vehicle, driving of pumps, driving of fans, and the like. The third core 3105 can control the control module 33 to operate, to achieve the above control functions.

In this way, under the control of the third core 3105 of the control chip 31, the control module 33 can operate to implement the control functions of the vehicle 1000.

Referring to FIG. 8, in some examples, the low-voltage control module 310 further includes a peripheral circuit 35 and a control chip 31. The peripheral circuit 35 is configured to support the control chip 31 to implement a setting function. The low-voltage control module 33 further includes a low-voltage power module 37. The low-voltage power module 37 is configured to supply low-voltage power to the control chip 31 and the peripheral circuit 35.

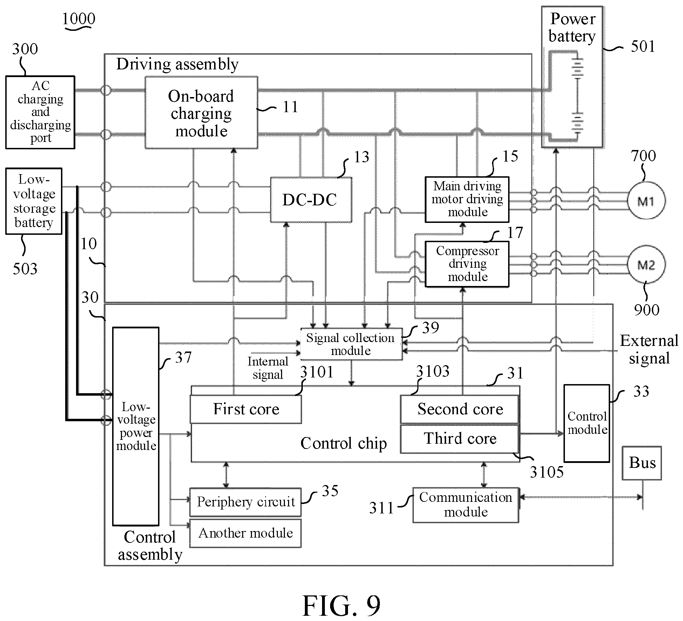

Specifically, the low-voltage power module 37 is connected with the low-voltage storage battery 503 and a DC-DC 13. The low-voltage power module 37 is configured to supply the low-voltage power to the control chip 31, the peripheral circuit 35, and another module device. The peripheral circuit 35 is connected with the control chip 31, which is a supporting peripheral circuit 35 of the control chip 31, and can support the control chip 31 to implement a setting function of the control chip. In addition, referring to FIG. 9, a joint of the low-voltage power module 37 and the DC-DC 13 as well as the low-voltage storage battery 503 may be arranged outside the integrated controller 100, to reduce a circuit of the integrated controller 100, and reduce an occupied space.

In this way, the low-voltage power module 37 can supply the low-voltage power to the control chip 31 and the peripheral circuit 35. The peripheral circuit 35 can support the control chip 31 to implement the setting function of the control chip, to meet an operating requirement of the control chip 31.

In some examples, the high-voltage power module 110 includes multiple conversion circuits. A controllable switch and/or a bleeder resistor may be arranged at the joint of the conversion circuits.

In this way, the controllable switch may be arranged at the joint of the conversion circuits, to flexibly control the conversion circuits to operate. The arrangement of the bleeder resistor may consume excess energy in the circuit, to protect the conversion circuit.

Referring to FIG. 9, in some examples, a vehicle 1000 includes a battery. A high-voltage power module 110 includes a main driving motor driving module 15, a compressor driving module 17, an on-board charging module 11, and a DC-DC 13. A low-voltage control module 33 includes a low-voltage power module 37. The low-voltage control module 33 includes a signal collection module 39 and a control chip 31. The signal collection module 39 is configured to collect a signal from each of the battery, the main driving motor driving module 15, the compressor driving module 17, the on-board charging module 11, the DC-DC 13, and the low-voltage power module 37, and transmit the collected signal to the control chip 31. The chip performs controlling based on the transmitted signal.

Specifically, the signal collection module 39 is configured to collect internal signals and external signals of the battery, the main driving motor driving module 15, the compressor driving module 17, the on-board charging module 11, the DC-DC 13, and the low-voltage power module 37, and transmit the signals to the control chip 31 for the control chip 31 to learn states of the above devices and modules.

In this way, the control chip 31 may determine a state of another module through the signal collection module 39, to control the another module.

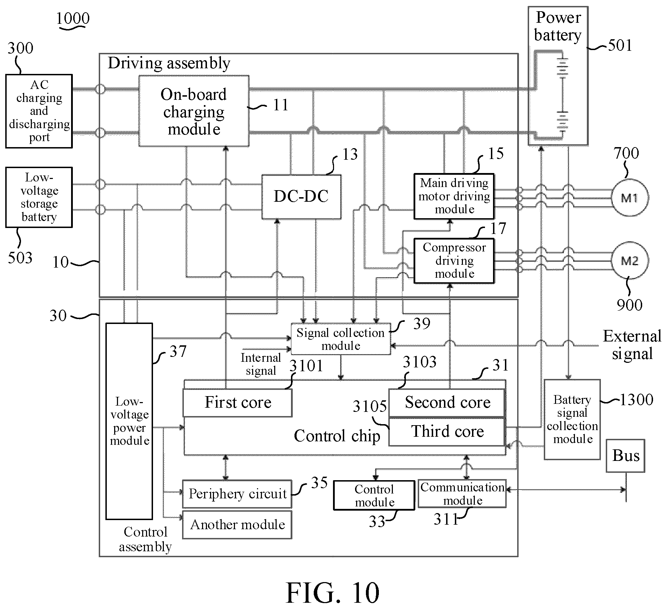

Referring to FIG. 10, in some examples, a vehicle 1000 includes a battery and a battery signal collection module 1300. A low-voltage control module 33 includes a control chip 31 that is integrated thereon. The battery signal collection module 1300 is configured to collect a signal of the battery and transmit the collected signal to the control chip 31. The control chip 31 controls charging and discharging of the battery based on the received signal.

Specifically, the battery may be a power battery 501. The battery signal collection module 1300 is configured to collect an internal signal and an external signal of the battery, and transmit the collected signals to the control chip 31. The signals may be further processed during the transmission, or may be directly transmitted to the control chip 31 without being processed. The control chip 31 controls the charging and discharging of the battery based on the received signals.

In this way, the battery signal collection module can collect the signal of the battery, and the control chip 31 may control the charging and discharging of the battery based on the signal of the battery collected by the battery signal collection module.

In some examples, the vehicle 1000 further includes a bus. The low-voltage control module 33 further includes a communication module 311 and a control chip 31 that are integrated thereon. The communication module 311 is connected with the control chip 31 and the bus. The communication module 311 is used for the integrated controller 100 to perform communication interaction with the outside.

In this way, the integrated controller 100 may perform communication interaction with the outside through the communication module 311, and the control chip 31 may communicate with the outside.

In some examples, the vehicle 1000 further includes a power battery pack 1500 and a power battery 501. The integrated controller 100 and the power battery 501 can be accommodated in the power battery pack 1500.

Specifically, the high-voltage power module 110 and the low-voltage control module 310 are separately integrated, so as to prevent the low-voltage control module 310 from being affected by thermal energy of the high-voltage power module 110. In addition, with high integration, the integrated controller 100 has a relatively small volume, and can be accommodated in the power battery pack 1500. In addition, the high-voltage power module 110 is integrated into the driving assembly 10 in a centralized manner, and the driving assembly 10 can be cooled uniformly, to dissipate thermal energy generated by the high-voltage power module 110 more effectively, so that thermal energy generated by the integrated controller 100 does not affect the power battery 501 arranged in the power battery pack 1500. In addition, the integrated controller 100 may be arranged in another position of the vehicle 1000, but is not limited to be arranged in the power battery pack 1500.

In this way, the integrated controller 100 is highly integrated, to cause the integrated controller to be arranged in the power battery pack 1500 with the power battery 501. Therefore, a mounting position does not need to be arranged separately for the integrated controller 100, thereby reducing an occupied space.

An example of the present disclosure provides an integrated control system. The integrated control system includes a load and the integrated controller 100 in any of the above examples. The integrated controller 100 is configured to control the load to operate.

Specifically, the load includes a power battery 501, a low-voltage storage battery 503, a main driving motor 700, a compressor 900, and the like. The integrated controller can be configured to control charging and discharging of the power battery 501 and the low-voltage storage battery 503, and can be further configured to control the main driving motor 700 and the compressor 900 to operate.

In this way, a high-power assembly that implements a high-voltage function is integrated into the driving assembly 10, and a low-voltage control assembly is integrated into the control assembly 30. Therefore, the high-voltage power module 110 that generates a relatively large amount of thermal energy and the low-voltage control module 310 are separately integrated, impact of thermal energy of the high-voltage power module 110 on the low-voltage control module 310 is reduced, and stability and an electromagnetic compatibility level of a circuit are improved while reducing an occupied space, which helps improve usage safety and reliability of the integrated controller 100.

An example of the present disclosure provides a vehicle 1000. The vehicle 1000 includes the integrated controller 100 in any of the above examples or the integrated control system in the above example.

In this way, a high-power assembly that implements a high-voltage function is integrated into the driving assembly 10, and a low-voltage control assembly is integrated into the control assembly 30. Therefore, the high-voltage power module 110 that generates a relatively large amount of thermal energy and the low-voltage control module 310 are separately integrated, impact of thermal energy of the high-voltage power module 110 on the low-voltage control module 310 is reduced, and stability and an electromagnetic compatibility level of a circuit are improved while reducing an occupied space, which helps improve usage safety and reliability of the integrated controller 100.

In the description of this specification, the description of reference terms such as "an example", "some examples", "an exemplary example", "an example", "a specific example", or "some examples" means that specific features, structures, materials, or characteristics described based on the implementation or example are included in at least one implementation or example of the present disclosure. In this specification, exemplary descriptions of the above terms are not necessarily directed at the same embodiment or example. In addition, a person skilled in the art may integrate or combine different embodiments or examples described in this specification and features of the different embodiments or examples as long as they do not contradict each other.

In addition, the term "connection" should be understood in a broad sense. For example, the connection may include a fixed connection, or may include a detachable connection, or an integral connection; or may include a direct connection, an indirect connection through an intermediary, or may include internal communication between two elements. A person of ordinary skill in the art may understand the specific meanings of the above terms in the present disclosure based on specific situations.

In addition, the terms "first" and "second" are used merely for the purpose of description, and cannot be construed as indicating or implying relative importance or implying a quantity of indicated technical features. Therefore, features defined with "first" and "second" may explicitly or implicitly include at least one of the features. In the description of the present disclosure, "multiple" means at least two, for example, two or three, unless otherwise explicitly and specifically defined.

Any process or method description described in the flowchart or in other manners herein may be understood as representing a module, fragment, or part of code including one or more executable instructions for implementing a specific logic function or steps of a process. In addition, the scope of preferred implementations of the present disclosure includes additional implementations in which functions may be performed out of the order shown or discussed, including performing the functions substantially simultaneously or in reverse order based on the involved functions. This should be understood by a person skilled in the technical field to which the embodiments of the present disclosure belong.

Although the embodiments of the present disclosure have been shown and described above, it may be understood that the above embodiments are exemplary and cannot be construed as a limitation on the present disclosure, and a person skilled in the art may make changes, modifications, substitutions, and variations to the above embodiments within the scope of the present disclosure.

## Claims

1. An integrated controller for a vehicle, the integrated controller comprising:
a driving assembly, the driving assembly comprising a plurality of high-voltage power modules integrally arranged; and
a control assembly, the control assembly comprising a plurality of low-voltage control modules integrally arranged, the low-voltage control module being configurable to control the high-voltage power module to operate.

2. The integrated controller according to claim 1, wherein the vehicle comprises an alternating current (AC) charging and discharging port and a battery that are integrated; the high-voltage power module is configurable to perform energy conversion; the high-voltage power module comprises a charging module; the low-voltage control module comprises a control chip; the control chip comprises a first core; and the first core is configured to control the charging module, to control the AC charging and discharging port to perform charging and discharging on the battery.

3. The integrated controller according to claim 2, wherein the charging module comprises an on-board charging module and a direct current (DC) conversion module; the on-board charging module is connected with the AC charging and discharging port and the battery; the DC conversion module is connected with the on-board charging module and the battery; and the first core is configured to control the on-board charging module and the DC conversion module, to control the AC charging and discharging port to perform the charging and discharging on the battery.

4. The integrated controller according to claim 3, wherein the battery comprises a power battery and a low-voltage storage battery; the on-board charging module comprises a first conversion circuit and a second conversion circuit that are integrated; the first core is configured to output a first pulse signal, to control the first conversion circuit to convert an AC voltage of the AC charging and discharging port into a first DC voltage; the first core is configured to output a second pulse signal, to control the second conversion circuit to convert the first DC voltage into a second DC voltage; the second DC voltage is configurable to charge the power battery; the first core is further configured to output a third pulse signal, to control the DC conversion module to convert the second DC voltage into a third DC voltage; and the third DC voltage is configurable to charge the low-voltage storage battery.

5. The integrated controller according to claim 4, wherein the first conversion circuit comprises a first bridge arm, a second bridge arm, a third bridge arm, a first capacitor, a first inductor, and a second inductor; each bridge arm comprises two switch transistors connected in series with each other; the first bridge arm, the second bridge arm, the third bridge arm, and the first capacitor are connected in parallel with each other; a first end of the first inductor and a first end of the second inductor are connected together with a first port of the AC charging and discharging port; a midpoint of the first bridge arm is connected to the first port of the AC charging and discharging port through the first inductor; a midpoint of the second bridge arm is connected to the first port of the AC charging and discharging port through the second inductor; a midpoint of the third bridge arm is connected with a second port of the AC charging and discharging port; and the first core is configured to output the first pulse signal, to control off or on of the switch transistor of the first conversion circuit, to convert the AC voltage of the AC charging and discharging port into the first DC voltage.

6. The integrated controller according to claim 4, wherein the second conversion circuit comprises a second capacitor, a third capacitor, a third inductor, a fourth inductor, a first transformer, a fourth bridge arm, a fifth bridge arm, a sixth bridge arm, and a seventh bridge arm; the fourth bridge arm, the fifth bridge arm, and the first capacitor of the first conversion circuit are connected in parallel with each other; a midpoint of the fourth bridge arm is connected to a first end of the first transformer successively through the second capacitor and the third inductor; a midpoint of the fifth bridge arm is connected with a second end of the first transformer; the sixth bridge arm and the seventh bridge arm are connected in parallel with each other, and are connected together with two ends of the power battery; a midpoint of the sixth bridge arm is connected to a third end of the first transformer through the third capacitor and the fourth inductor; a midpoint of the seventh bridge arm is connected with a fourth end of the first transformer; and the first core is configured to output the second pulse signal, to control off or on of a switch transistor of the second conversion circuit, to convert the first DC voltage into the second DC voltage.

7. The integrated controller according to claim 4, wherein the DC conversion module comprises an eighth bridge arm, a ninth bridge arm, a fourth capacitor, a fifth capacitor, a fifth inductor, a second transformer, a first switch transistor, a second switch transistor, and a diode; the eighth bridge arm and the ninth bridge arm are connected in parallel with each other; a midpoint of the eighth bridge arm is connected to a first end of the second transformer successively through the fourth capacitor and the fifth inductor; a midpoint of the ninth bridge arm is connected with a second end of the second transformer; a third end and a fourth end of the second transformer are connected to the diode, the fifth capacitor, and the low-voltage storage battery through the first switch transistor and the second switch transistor; and the first core is configured to output the third pulse signal, to control off or on of a switch transistor of the DC conversion module, to convert the second DC voltage into the third DC voltage.

8. The integrated controller according to claim 1, wherein the vehicle comprises a compressor; the high-voltage power module is configurable to perform energy conversion; the high-voltage power module comprises a compressor driving module that is integrated; the low-voltage control module comprises a control chip; the control chip comprises a second core; and the second core is configured to control the compressor driving module to operate, to drive the compressor to operate.

9. The integrated controller according to claim 8, wherein the compressor comprises three compressor phase lines; the compressor driving module comprises a tenth bridge arm, an eleventh bridge arm, a twelfth bridge arm, and a sixth capacitor; each bridge arm comprises two switch transistors connected in series with each other; the sixth capacitor, the tenth bridge arm, the eleventh bridge arm, and the twelfth bridge arm are connected in parallel with each other; a midpoint of the tenth bridge arm, a midpoint of the eleventh bridge arm, and a midpoint of the twelfth bridge arm are respectively connected with first ends of the three compressor phase lines of the compressor; other ends of the three compressor phase lines are connected with each other; and the second core is configured to output a fourth pulse signal, to control off and on of the switch transistor of the compressor driving module, to drive the compressor to operate.

10. The integrated controller according to claim 1, wherein the vehicle comprises a main driving motor; the high-voltage power module is configurable to perform energy conversion; the high-voltage power module comprises a main driving motor driving module that is integrated; the low-voltage control module comprises a control chip; the control chip comprises a second core; and the second core is configured to control the main driving motor driving module to operate, to drive the main driving motor to operate.

11. The integrated controller according to claim 10, wherein the main driving motor comprises three main driving phase lines; the main driving motor driving module comprises a thirteenth bridge arm, a fourteenth bridge arm, a fifteenth bridge arm, and a seventh capacitor; each bridge arm comprises two switch transistors connected in series with each other; the seventh capacitor, the thirteenth bridge arm, the fourteenth bridge arm, and the fifteenth bridge arm are connected in parallel with each other; a midpoint of the thirteenth bridge arm, a midpoint of the fourteenth bridge arm, and a midpoint of the fifteenth bridge arm are respectively connected with first ends of the three main driving phase lines of the main driving motor; other ends of the three main driving phase lines are connected with each other; and the second core is configured to output a fifth pulse signal, to control off and on of the switch transistor of the main driving motor driving module, to drive the main driving motor to operate.

12. The integrated controller according to claim 1, wherein the vehicle comprises a DC charging and discharging port and a power battery; the high-voltage power module comprises a main driving motor driving module; the low-voltage control module comprises a control chip that is integrated; the control chip comprises a second core; and the second core is configurable to control the main driving motor driving module to operate, to control the DC charging and discharging port to perform DC charging and discharging on the power battery,
preferably wherein the vehicle further comprises a control switch; an end of the DC charging and discharging port is connected to a positive electrode of the power battery through the control switch; another end of the DC charging and discharging port is connected with the main driving motor driving module; and the second core is configurable to control off of the control switch and control the main driving motor driving module to operate, to control the DC charging and discharging port to perform the DC charging and discharging on the power battery;
or wherein the vehicle further comprises a capacitor; an end of the DC charging and discharging port is connected with an end of the capacitor, and is connected to the power battery through a main driving motor; another end of the DC charging and discharging port is connected with another end of the capacitor and the main driving motor driving module; and the second core is configurable to control the main driving motor driving module to operate, to control the capacitor and the main driving motor to convert a voltage of the DC charging and discharging port into a voltage configurable for charging the power battery, to perform the DC charging and discharging on the power battery.

13. The integrated controller according to claim 1, wherein the vehicle comprises a power battery; the low-voltage control module comprises a control chip that is integrated; the control chip comprises a third core; and the third core is configured to perform energy management on the power battery;
or wherein the low-voltage control module comprises a control chip and a control module that are integrated; the control chip comprises a third core; and the third core is configured to control the control module to operate, to realize a control function of the vehicle ;
or wherein the vehicle comprises a power battery pack and a power battery; and the integrated controller and the power battery are accommodatable in the power battery pack.

14. An integrated control system, comprising a load and the integrated controller according to any of claims 1 to 13, the integrated controller being configured to control the load to operate.

15. A vehicle, comprising the integrated controller according to any of claims 1 to 13 or the integrated control system according to claim 14.
